Europäisches Patentamt

European Patent Office

Office européen des brevets

(11) Publication number: **0 157 841**
**B1**

# EUROPEAN PATENT SPECIFICATION

(45) Date of publication of patent specification: **31.05.89**

(21) Application number: **84903637.1**

(22) Date of filing: **21.09.84**

(86) International application number:
**PCT/FI84/00068**

(87) International publication number:
**WO 85/01342 28.03.85 Gazette 85/08**

(51) Int. Cl.⁴: **G 01 B 15/06,** G 01 L 1/25,
G 01 N 23/20

(54) **MEASURING INSTRUMENT BASED ON X-RAY DIFFRACTION FOR MEASURING STRESSES.**

(30) Priority: **22.09.83 FI 833393**

(43) Date of publication of application:
**16.10.85 Bulletin 85/42**

(45) Publication of the grant of the patent:
**31.05.89 Bulletin 89/22**

(84) Designated Contracting States:
**AT BE CH DE FR GB LI LU NL SE**

(56) References cited:
**DE-A-3 236 109
FI-B- 61 248
GB-A-2 083 215
US-A-3 639 758
US-A-3 663 812
US-A-3 784 816
US-A-3 859 525
US-A-3 868 506
US-A-3 982 127
US-A-4 128 762
US-A-4 131 794**

The file contains technical information
submitted after the application was filed and
not included in this specification

(73) Proprietor: **INSINÖÖRITOIMISTO MEXPERT OY
Länsituulenkuja 3
SF-02100 Espoo (FI)**

(72) Inventor: **KORHONEN, Matti
Kivenlahdenkatu F 63
SF-02320 Espoo (FI)**
Inventor: **LINDROOS, Veikko
Iivisniemenaukio 4 A
SF-02260 Espoo (FI)**

(74) Representative: **Onn, Thorsten et al
AB Stockholms Patentbyra Zacco & Bruhn P.O.
Box 3129
S-103 62 Stockholm (SE)**

# Description

The present invention concerns an apparatus based on x-ray diffraction for measuring the stress stage of metals, said apparatus including the x-ray tube producing x-radiation and a detector inclined about an inclination axis laying on the surface of a sample to be examined via said x-radiation which is substantially perpendicular to the direction of the stresses being examined, said detector recording the diameters of the Debye rings in the direction of the surface of be examined at at least two inclination angles, said detector being elongated in the direction of said inclination axis and narrow enough in the opposite direction so that a sufficiently large inclination angle of said detector for measuring operation of said apparatus is feasbile.

The need of non-destructive stress measurement has increased powerfully in recent years. A non-destructive stress measuring method in more extensive use is based on the diffraction of x-rays in crystalline matter. The greatest shortcoming of the measuring equipments is their complex design and great bulk, impeding their application in field conditions.

Stress measuring methods based on x-ray diffraction measure stresses in the surface of crystalline material. The depth of penetration of the x-rays is on the order of 5 to 24 µm. The stresses in the surface are significant with a view to the durability of structures because damage usually starts in the superficial layers, as exemplified by stress corrosion, brittle fracture, fatigue, etc.

According to international estimates, the annual losses from material-technological faults amount to about 50 billion Finnish marks, a remarkable part thereof caused by residual stresses.

Residual stresses always arise as a result of inhomogeneous deformation, which may be a consequence of the following factors, among others, working, temperature differences, phase transformation, different thermal expansion coefficients of different phases. The most important metal treatments in which residual stresses are incurred are welding, heat treatments and machining, e.g. by grinding.

Residual stresses are usually divided into two groups depending on their distance of influence: macrostresses and microstresses. The sphere of influence of macrostresses extends, at a minimum, over several grains, whereas microstresses are concentrated in the region of one grain. By x-ray diffraction, macrostresses are measured, which are either compression or tensile residual stresses. Unfavourable from the viewpoint of structures are tensile stresses in the surface; compression stresses on the other hand improve for instance the fatigue strength of metals, and it is therefore often desirable to achieve a compression stress in the surface of metallic components. The most important methods by which a state of compression stress can be produced are ball blasting, rolling, hammering, and in general any method by which metal surface is plastically deformed. Non-destructive stress measuring methods and means of prior art have been applied in practical conditions comparatively little because no useable measuring apparatus has been available. However, increasing attention is now being paid to residual stresses because it has been found in practical experiments that residual stresses often have an equally essential significance for the durability of structures as cracks and other discontinuities in the structure. According to Japanese study, in 80% of stress corrosion cases the residual stresses that have been produced as a consequence of welding or of other manufacturing procedures have been the stress component causing the damage. Increased size of structures and increased emphasis on their safety (energy and off-shore technologies as their examples) have increased the need also of stress measurements.

With a view to eliminating the disadvantages mentioned, the present applicant has discloses (in the Finnish Patent No. 61248) a so-called improved camera procedure which requires small apparatus and is simple of its design, compared with diffractometer apparatus that was in general use theretofore.

There are in principle two types of stress measuring instrument based on x-ray diffraction: camera and diffractometer apparatus. By the camera construction, the simplest and smallest instrument construction is achieved, but its drawback is the comparatively long time required to expose and develop the film. With diffractometers, the x-ray intensity is measured as a function of the 2 angle with a proportional or a scintillation counter. One has to run a scan with the counter over a given 20 angle range, and this requires an accurate goniometer apparatus: diffractometer are for this reason relatively bulky, complex and expensive instruments in view of field work. It has been possible somewhat to reduce the size of diffractometers and to increase their speed with the aid of so-called location-sensing detectors.

Since the use of the camera method disclosed in the Finnish Patent No. 61248 is associated with a comparatively long time required for exposing and developing the film, the object of the present invention is to develop a stress measuring apparatus which has a bulk on the same order as the camera construction but which is substantially faster in use.

According to the invention, in order to attain the aims stated, and others which will become apparent later on, the apparatus as defined in the introduction passage is mainly characterized in that said detector comprises integrated solid state photosensor means for directly converting x-rays reflected from said sample to be examined to electrical signals, and circuit means for determining the stresses to be measured from said electrical signals.

The stress measuring means of the present invention has been derived from the improved camera procedure of the aforementioned Finnish Patent No. 61348, which has the advantage of ideal Schultz-type focussing, which minimizes the focussing and absorption errors. Another factor which reduces the random errors and many apparatus errors is that in the improved camera procedure instead of the Debye rings their diameters are measured. In the present invention, the film which had to be used in the Finnish Patent No. 61248 is replaced by solid state photosesnor means, which converts the x-rays into electrical siganls.

US—A—4 245 158 discloses an apparatus obtaining both non-dispersive and spatially-resolved soft x-ray spectra from a distributed soft x-ray source. An x-ray source is used to irradiate a CCD camera having a back-illuminated CCD. Furthermore a mechanical or electronic shutter effect is used to define an integration period for the pixels of the CCD that ensures that the probability of a single pixel receiving more than one photon during the integration period is small.

The x-ray spectroscopy methods disclosed in said patent are different from the x-ray diffractometric measurement accomplished by the present invention. Thus, in diffractometric analysis, the direct x-ray beam is not received, but rather the rays reflected from a crystal under study are recorded. Strong reflection of essentially a single wavelength arise, with the diffractometric analyses yielding information concerning interplanar spacings or crystals.

US—A—3 784 818 discloses a method for measuring the maganitude of a great number of quantities which may vary very rapidly within wide limits. Each magnitude to be measured is converted into a light signal having an intensity corresponding to the magnitude of the respective quantity. Contrary to this the present invention utilizes an integrated solid state photosensor means which converts x-rays directly to electrical signals and not to light signals.

US—A—4 131 794 discloses a fluorescent x-ray spectrometer for analyzing a specimen comprising a detector consisting of a row of solid state detector elements being readable in a location-dependent and on a line manner.

Contrary to that which follows from the patent the present invention is based on diffractometric measurements. The common factor of the apparatus of the invention and that which follows from the patent is that x-ray radiation is used to examine different properties of material. The patent only shows (this also applies to US—A—3 784 816) that in certain applications certain kinds of local sensitive detectors can be used in place of a film if sufficient space is available.

With the new apparatus design of the invention, by which the same size class is reached as with camera means, the measurement is substantially faster than the camera method—from a few seconds to one minute—contrasting with the time spent in the camera method of prior art, which is upward of five minutes, to which has to be added the time spent in developing and photometrating the film.

By the stress measuring procedure based oni x-ray diffraction the following questions, among others, can be addressed:—

occurrence and quantity of residual stresses produced at welding and heat treatment;

necessity of stress relief annealing, and its efficiency e.g. for welds and for castings;

aiding the designing of structures subjected to load;

acceptance inspections and reinspections of load-bearing structures (e.g. pressure vessels, reactors, etc.)

The portability of the apparatus renders possible the performing of measurements in the true field conditions, of which as examples may be mentioned the material questions in the following branches of industry:—

off-shore and maritime technology;

energy production;

heavy mechanical engineering;

mining industry;

process industry.

In the following, the invention is described in detail with reference made to the schematic diagrams in the attached drawing and to apparatus examples.

Fig. 1A presents schematically the average spacing of the atomic planes of a given substacne in stress-free state, and Fig. 1B shows the same situation in the state subject to stress $\sigma_{xx}$.

Fig. 2 illustrates the principle of reflection of x-rays from the object under examination.

Fig. 3 illustrates the various parameters used in the x-ray procedure.

Fig. 4 presents the detector surface shaped like part of a cylinder which is employed in the invention.

Fig. 5 presents an example of the graphic display obtained in the measurement on the display terminal connected to the computer, the vertical axis being the number of pulses per channel and the horizontal axis, the number of channels.

Figs. 6A and 6B present schematically an embodiment of the invention wherein a detector surface is used which can be implemented by the solid state technology of integrated circuits so that a major part of the electronics required in the equipment is inherent in the structure of the detector surface itself.

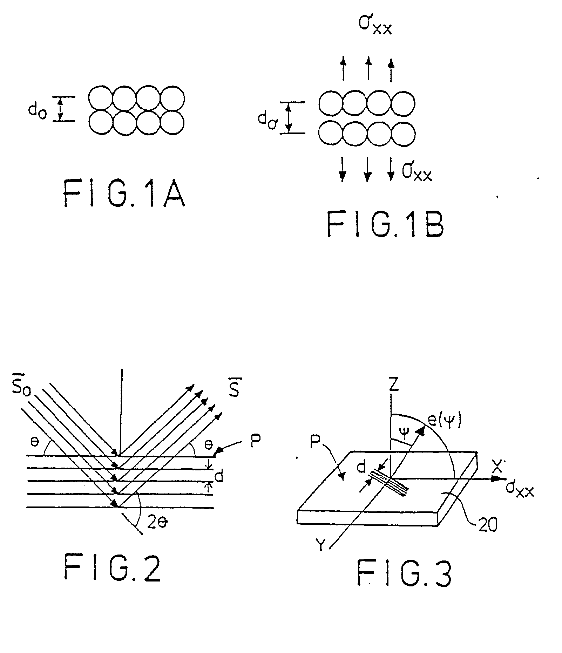

In the x-ray method constituting the basis of the present invention, the spacing d of atomic planes is used as measuring length (Fig. 1). X-rays having the wavelength λ are reflected by the atomic planes when striking the planes under the angle θ, which is found by Bragg's law

(1)     $$2d\sin\theta = \lambda$$

as Fig. 2 shows.

Let us now consider the case depicted in Fig. 1, where the normal stress $\sigma_{xx}$ perpendicular against the atomic planes increases the atomic

plane spacing form $d_o$ to $d_o$. With the aid of Bragg's law, both distances $d_o$ and $d_{o\prime}$ can be calculated using the respective Bragg angle $0$, which is measured by the aid of x-ray diffraction, and thereby the normal deformation in calculable by the formula

$$(2) \qquad e_{xx} = \frac{d - d_o}{d_o}$$

The corresponding stress $\sigma_{xx}$, which causes the deformation $e_{xx}$, is now determinable by the aid of Hooks's law

$$(3) \qquad \sigma_{xx} = E e_{xx}.$$

where E is the modulus of elasticity.

More generally, the x-ray method produces the normal stress component $\sigma_{xx}$ in the selected direction x when at least two deformations $e(\psi)$ in the xz plane are measured (Fig. 3). We find from Hooke's general law:

$$(4) \qquad \sigma_{xx} = \frac{E}{1+v} \frac{e(\psi_2) - e(\psi_1)}{\sin^2\psi_2 - \sin^2\psi_1}$$

where v is the Poisson ratio.

According to the general theory of elasticity, the entire stress state is defined when three stress components with different directions are known.

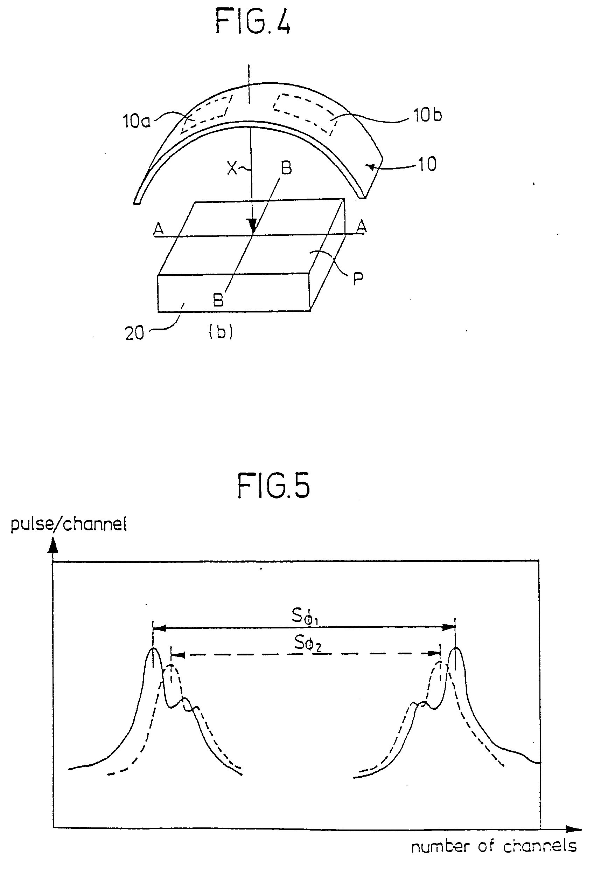

When in accordance with the starting point of the invention the beams of the reflections are recorded on a cylindrical or equivalent (Fig. 4) detector surface 10 paralleling the diameter A—A to be measured, the reflections from austenitic steels, e.g. $(220)_{Cr-K\alpha}$ and $(310)_{Cr-K\beta}$, can be recorded using inclination angles $\psi_1$ and $\psi_2$ differing sufficiently (equation (4)) so that adequate accuracy is achievable in the stress measurement.

Since however the $2\theta$ angle (Fig. 2) is slightly too small, the Debye diameters must be measured with correspondingly greater accuracy in order to attain the accuracy which is characteristic of the common camera methods of prior art, in determination of stress state in steels. This is in fact possible in the improved camera method constituting the basis of the invention because in this method the images made under different inclinations can be focussed, since the absorption factor is not dependent on the inclination, since many apparatus-specific factors introduce no error when diameters are being measured, and since the random errors of the $2_\theta$ angle found by the aid of diameter measurement are less than those incurred in measuring vertical beams.

It is thus understood that by the improved camera method of the invention in which a special detector surface appropriate for examining austenitic steels (which shall be more closely described later on) is used, it is possible to measure the stress states of austenitic steels with accuracy which is typical when examining the stress states of ferritic steels by common, known camera methods by which determination of the stress states in austenitic steels with adequate accuracy has been impossible heretofore.

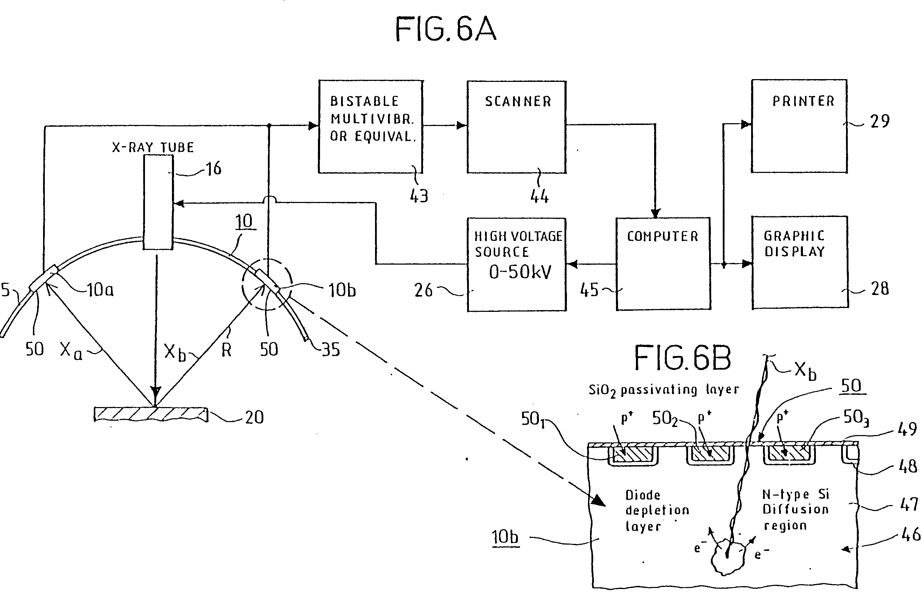

The means of the invention, presented in Fig. 4 and 6A, comprises an x-ray tube 16, disposed to be rotatable about the axis of rotation A—A. The axis A—A is perpendicular to the strain effect direction of the stress that is to be measured. The axis A—A passes through the point P to be examined of the specimen 10 to be examined or close to this point. For swivelling the apparatus about the axis A—A, the stand includes a rotational axis with round cross section around which a tightenable and lockable ring (not depicted) has been provided, as can be seen more clearly in the said Finnish Patent No. 61248 by the same applicant.

In the present invention, the x-ray film of the said Finnish Patent No. 61284 and its cassette have been replaced by a detector surface 10.

In the following is described in greater detail the improved camera method, which constitutes the basis of the invention, and which shall be further developed in the present invention in order to attain the objects stated in the foregoing.

With coatings 10a and 10b as disclosed in Fig. 4, the diameters 2S of the Debye rings in the direction of the axis are measured directly. From said diameters, the tangent of the reflection angle $180° - 2\theta = \overline{2\theta}$ is obtained from the formula

$$(5) \qquad tg\overline{2\theta} = \frac{2S}{2D}$$

where D is the distance between the test specimen 20 and the detector surface 10. The deformation are therefore obtained by the formula

$$(6) \qquad e(\psi) = \frac{\cos^2 2\theta}{2 tg\theta}(tg2\theta_\psi - tg\overline{2\theta}_o),$$

and when we substitute this in equation (4), we obtain the operating formula of the procedure of the invention:

$$(7) \qquad \sigma_{xx} = K_2(S_{\psi2} - S_{\psi1}),$$

where the stress coefficient is

$$(8) \qquad K_2 = \frac{E\cos^2 2\theta}{2D(1+v)tg} \frac{1}{\sin^2\psi_2 - \sin^2\psi_1}$$

In Fig. 5 is shown the graphic representation obtained on the display screen in the measurements, one graph at a time being displayed. In Fig. 5 the vertical axis is the number of pulses per channel received from a multichannel analyser, and the horizontal axis represents the number of channels. When the distance S between peaks of the graphs in Fig. 5 is measured for two different inclination angles $\psi$, the stress can be calcualted from the formula (7) presented above. A computer 45 may be programmed to calculate directly the measured stresses on the basis of the formulae presented in the foregoing, and the results of stress measurement are obtainable directly from a graphic display 28 and/or a printer 29.

As was observed before, the coatings 10a and 10b may be replaced with a single detector surface which may even extend over the entire arcuate shape. The detector surface may be implemented for instance by using the production technique of integrated circuits. In that case, in the structure of the detector surface itself a plurality of those functions may be accommodated which are assigned to specific electronic units. In this case an electric signal is directly obtained from said coating on the basis of which the stresses to be measured can be detected. An embodiment example of the invention as just described is schematically outlined in Figs. 6A and 6B, according to which a series $50=50_1...50_N$ of photodiodes (N in number) is used for the detector surface 10, into said series 50 having been integrated a fluorescent film. When an x-ray X hits film 46, it emits a photon, and the photodiode $50_n$ in this location admits a voltage, which is supplied e.g. by a square wave generator. Said voltage pulse changes the state of a bi-stabil multivibrator 43 or equivalent when an x-ray X excites a photon in the adjacent diode $50_n$. The multivibrator 43 or equivalent may be incorporated in the integrated structure of the detector surface 10, which is arcuate in shape in the manner described above. The changes of state of the multivibrator 43 are recorded by a fast scanner 44, and the electrical signal produced in this way is input to the computer 45. Instead of said bi-stabil multivibrator 43 and scanner 44, a digital counter may be directly used which records the number of voltage pulses arriving from the detector surface 10.

The principles of operation of the photodiodes $50_1...50_N$ shown in Fig. 6A are as follows.

The absorption and sensing of x-rays Xa, Xb takes place in the bulk silicon 46 below the surface of the photodiode array 50. The entire surface of the photosensor region is covered by a passivating layer of 1-$\mu$m-thick silicon dioxide 49, allowing exposure to the ambient atmosphere. The mechanism sensing the charge developed by current sources in the silicon is derived from the properties of the diode junctions of p+strips $50_1...50_N$ (diode elements) and the n-type substrate 47. Periodically, the scanning circuit cycles through the array 50, connecting each p+region in turn to bias lines, also called video lines, (not shown) that run along either side of the photodiode array 50. During the short time that contact is maintained for each diode element $50_1...50_N$, the voltage on the line reverse-biases the diode and forms a shallow depletion layer 48 at the junction. Even after contact with the bias line is broken by the scanning circuit, the depletion layer 48 is maintained by charge stored at its boundaries. The depletion layer 48 thus appears as a capacitor whose stored charge can be dissipated between scans only by current sources in the silicon. Principal sources are thermal dark current and photocurrent arising from photon absorption. The extent to which these sources discharge the depletion layer 48 is sensed at the same time that the diodes $50_1...50_N$ are sequentially biased in consecutive scan cycles. At room temperature, the period between consecutive scans, and hence the signal integration time of the photodiodes $50_1...50_N$ has an upper limit of several hundred milliseconds so that the dark current alone will not completely discharge the depletion layer 48.

In the following are stated the claims, within the inventive idea of which various details of the invention may vary.

## Claims

1. Apparatus based on x-ray diffraction for measuring the stress state of metals, said apparatus including an x-ray tube (18) producing x-radiation and a detector (10) included about an inclination axis (A—A) lying on the surface of a sample (20) to be examined via said x-radiation which is substantially perpendicular to the direction of the stresses being examined, said detector (10) recording the diameters ($2S_{ax}$) of the Debye rings in the direction of the surface to be examined at at least two inclination angles, said detector (10) being elongated in the direction of said inclination axis (A—A) and narrow enough in the opposite direction so that a sufficiently large inclination angle ($\psi$) of said detector (10) for measuring operation of said apparatus is feasible, characterized in that said detector (10) comprises integrated solid state photosensor means for directly converting x-rays reflected from said sample (20) to be examined to electrical signals, and circuit means for determining the stresses to be measured from said electrical signals.

2. Apparatus as claimed in claim 1, characterized in that said circuit means includes recording means for recording said electrical signals.

3. Apparatus as claimed in claim 1 or 2, characterized in that said photosensor means comprises a photodiode array or equivalent and cooling means for said photodiode array or equivalent.

4. Apparatus as claimed in claim 2, characterized in that said recording means comprises rapid scanner means (44) and that said circuit means further includes a computer (45), a graphic display (28) and/or printer (29), said computer being programmed to present the results of stress measurement in said graphic display (28) and/or via said printer (29) in printed form.

5. Apparatus as claimed in claim 2, characterized in that said recording means comprises a digital counter.

6. Apparatus as claimed in claims 1 to 5, in which said x-ray tube (16) is mounted to be rotatable about an inclination axis, said inclination axis passing through a point (P) to be examined of a sample (20) to be examined, and which apparatus further comprises a collimeter for said x-ray tub, characterized in that said photosensor means are located symmetrically on both sides of said collimator.

## Patentansprüche

1. Mit Röntgendiffraktion wirkende Vorrichtung zur Messung des Spannunggszustandes in Metallen, wobei die Vorrichtung ein Röntgenstrahlen erzeugendes Röntgenstrahlenrohr (16) und einen um eine Neigungsachse (A—A) geneigten, auf der Oberfläche eines mit der im wesentlichen senkrecht zur Spannungsebene verlaufenden Röntgenstrahlung zu messenden Prüfstückes (20) liegenden Detektor (10) umfasst, wobei der Detektor (10) die Durchmesser ($2S_{ax}$) der Debye-Ringe in der Richtung der zu messenden Oberfläche an mindestens zwei Neigungswinkeln aufzeichnet, der Detektor (10) in der Richtung der Neigungsachse (A—A) ablang und schmal genug in der entgegengesetzten Richtung ist um einen ausreichend grossen Neigungswinkel (ψ) des Detektors für den Messvorgang der Vorrichtung zu ermöglichen, dadurch gekennzeichnet, dass der Detektor (10) integrierte Halbleiter-Photosensoren zur Direkiumwandlung der vom zu messenden Prüfstück (20) reflektierten Röntgenstrahlen in elektrische Siganle sowie Schaltkreisorgane zur Bestimmung der zu messenden Spannungen aus den elektrischen Signalen umfasst.

2. Vorrichtung gemäss Patentanspruch 1, dadurch gekennzeichnet, dass die Schaltkreisorgane Aufzeichnungsmittel zur Aufzeichnung der elektrischen Signale beinhalten.

3. Vorrichtung gemäss Patentanspruch 1 oder 2, dadurch gekennzeichnet, dass die Photosensoren eine Reihe von Photodioden oder Entsprechendes sowie Kühlvorrichtungen für die Photodioden oder Entsprechendes umfassen.

4. Vorrichtung gemäss Patentanspruch 2, dadurch gekennzeichnet, dass die Aufzeichnungsmittel Schnellesevorrichtungen (44) umfassen, und dass die Schaltkreisorgane ausserdem einen Rechner (45), ein graphisches Display (28) und/oder einen Ausdrucker (29) umfassen, wobei der Rechner programmiert ist die Ergebnisse der Spannungsmessungen auf dem graphischen Display (28) und/oder über den Ausdrucker (29) in gedruckter Form auszuweisen.

5. Vorrichtung gemäss Patentanspruch 2, dadurch gekennzeichnet, dass die Aufzeichnungsmittel einen Digitalzähler umfassen.

6. Vorrichtung gemäss einer der Patentansprüche 1 bis 5, in der das Röntgenstrahlenrohr (16) um eine Neigungsachse drehbar angeordnet ist, wobei die Neigungsachse einen zu vermessenden Punkt (P) eines Prüfstückes (20) passiert, und die Vorrichtung ausserdem einen Kollimator für das Röntgenstrahlenrohr aufweist, dadurch gekennzeichnet, dass die Photosensoren symmetrisch zu beiden Seiten des Kollimators angeordnet sind.

## Revendications

1. Appareil basé sur la diffraction des rayons X pour mesurer l'état de contrainte de métaux, ledit appareil comprenant un jube à rayons X (16) engendrent un rayonnement X et un déteceteur (10) incliné autour d'un axe d'inclinaison (A—A) situé à la surface d'un échantillon (20) à examiner à l'aide dudit rayonnement X et sensiblement perpendiculaire à la direction des contraintes examinées, ledit détecteur (10) enregistrant les diamètres ($2S_{ax}$) des anneaux de Debye dans la direction de la surface à examiner sous au moins deux angles d'inclinaison, ledit détecteur (10) étant allongé dans le sens dudit axe d'inclinaison (A—A) et suffisamment étroit dans le sens opposé pour permettre un angle d'inclinaison (ψ) suffisant dudit détecteur (10) pour l'opération de mesure dudit appareil, caractérisé en ce que ledit détecteur (10) comprend un organe photocapteur intégré à semiconducteurs, permettant de convertir directement en signaux électriques les rayons X réfléchis par ledit échantillon (20) à examiner, ainsi qu'un organe à circuits permettant de déterminer les contraintes à mesurer à partir desdits signaux électriques.

2. Appareil selon la revendication 1, caractérisé en ce que ledit organe à circuits comprend un organe d'enregistrement desdits signaux électriques.

3. Appareil selon l'une des revendications 1 et 2, caractérisé en ce que ledit organe photocapteur comprend une série de photodiodes ou de moyens analogues et un dispositif de refroidissement de ladite série de photodiodes ou de moyens analogues.

4. Appareil selon la revendication 2, caractérisé en ce que ledit organe d'enregistrement comprend un organe explorateur rapide (44) et que ledit organe à circuits comprend en outre un calculateur (45), un affichage graphique (28) et/ou une imprimante (29), ledit calculateur étant programmé pour fournir les résultats de la mesure des contraintes sur ledit affichage graphique (28) et/ou, au moyen de ladite imprimante (29), sous forme imprimée.

5. Appareil selon la revendication 2, caractérisé en ce que ledit organe d'enregistrement comprend un compteur numérique.

6. Appareil selon les revendications 1 à 5, dans lequel ledit tube à rayons X (16) est monté tournant autour d'un axe d'inclinaison passant par un point (P) à examiner d'un échantillon (20) à examiner, appareil comprenant en outre un collimateur pour ledit tube à rayons X, caractérisé en ce que lesdits organes photocapteurs sont disposés symétriquement de part et d'autre dudit collimateur.

$d_0$

FIG.1A

$\sigma_{xx}$

$d_\sigma$

$\sigma_{xx}$

FIG.1B

$\bar{S}_0$

$\bar{S}$

$\theta$

$\theta$

P

d

$2\theta$

FIG.2

Z

$e(\psi)$

$\psi$

P

X

d

$\sigma_{xx}$

20

Y

FIG.3

# FIG.4

# FIG.5

## FIG.6A

X-RAY TUBE — 16

BISTABLE MULTIVIBR. OR EQUIVAL. — 43

SCANNER — 44

PRINTER — 29

HIGH VOLTAGE SOURCE 0-50kV — 26

COMPUTER — 45

GRAPHIC DISPLAY — 28

10 · 10a · 10b · 35 · 50 · $X_a$ · $X_b$ · R · 20

## FIG.6B

SiO₂ passivating layer

$X_b$ · 50 · $50_1$ · $p^+$ · $50_2$ · $p^+$ · $p^+$ · $50_3$ · 49 · 48 · 47 · 46

Diode depletion layer

10b

N-type Si Diffusion region

$e^-$ · $e^-$

EP 0 157 841 B1